# EUROPÄISCHE PATENTSCHRIFT

(11) **EP 3 535 549 B1**
(45) Veröffentlichungstag und Bekanntmachung des Hinweises auf die Patenterteilung: **16.09.2020**
(21) Anmeldenummer: 17787142.3
(22) Anmeldetag: 10.10.2017
(51) Int. Cl.: G01F 1/688, G01F 15/00

(54) **VERFAHREN ZUR HERSTELLUNG EINES FÜHLERS FÜR EIN THERMISCHES DURCHFLUSSMESSGERÄT, FÜHLER UND DURCHFLUSSMESSGERÄT**
METHOD OF MANUFACTURING A PROBE FOR A THERMAL TYPE FLOWMETER, PROBE AND FLOWMETER
PROCÉDÉ DE FABRICATION D'UNE SONDE POUR UN DÉBITMÈTRE DU TYPE THERMIQUE, SONDE ET DÉBITMÈTRE

(30) Priorität: 04.11.2016 DE 102016121110
(43) Veröffentlichungstag der Anmeldung: 11.09.2019
(73) Patentinhaber: Endress+Hauser Flowtec AG, 4153 Reinach (CH)
(72) Erfinder: GABERTHÜEL, Stephan, 4104 Oberwil (CH); GRÜN, Alexander, 79539 Lörrach (DE); SCHULTHEIS, Hanno, 3274 Hermrigen (CH); BAUR, Tobias, 4145 Reinach (CH); BARTH, Martin, 4125 Riehen (CH); BADARLIS, Anastasios, 4127 Birsfelden (CH); NEYERLIN, Lars, 4246 Wahlen (CH); ARNOLD, Martin, 4153 Reinach (CH); POPP, Oliver, 4104 Oberwil (CH)
(74) Vertreter: Andres, Angelika Maria
(86) Internationale Anmeldenummer: PCT/EP2017/075788
(87) Internationale Veröffentlichungsnummer: WO 2018/082873

(56) Entgegenhaltungen:
- DE-A1-102010 031 127
- US-A- 5 271 138
- US-A1- 2005 223 828
- US-A1- 2009 260 431

## Beschreibung

Die Erfindung betrifft ein Verfahren zur Herstellung einer Sonde eines thermischen Durchflussmessgeräts zur Messung des Massedurchflusses eines Mediums in einem Messrohr, eine Sonde und ein Durchflussmessgerät.

Thermische Durchflussmessgeräte sind seit langer Zeit Stand der Technik, es werden ein oder mehrere Sonden in ein durch ein Messrohr strömendes Medium eingeführt, wobei die Sonden dazu eingerichtet sind, die Temperatur des Mediums zu messen oder das Medium zu heizen. Beispielsweise kann die temperaturmessende Sonde stromabwärts der heizenden Sonde angeordnet sein, so dass die temperaturmessende Sonde über das durch die heizende Sonde erwärmte Medium erwärmt wird.

Wichtig für eine hohe Messgenauigkeit eines thermischen Durchflussmessgeräts und für eine geringe Messgenauigkeitsschwankung zwischen verschiedenen Durchflussmessgeräten eines gleichen Typs ist eine konstante Bauqualität der verwendeten Sonden. Wichtig für eine hohe Sensitivität der Sonden in Bezug auf hohe Massedurchflüsse des Mediums ist ein geringer Wärmeübergangswiderstand zwischen einer Kontaktfläche der Sonde mit dem Medium und einem heizenden bzw. temperaturmessenden Thermoelement.

Der Stand der Technik, beispielsweise die DE102008015359A1, zeigt eine Sonde mit einer Sondenhülse, welche Sondenhülse ein in ein Füllmaterial eingebettetes Thermoelement aufweist.

Die US20090260431A1 zeigt eine Sonde eines Anemometers bzw. thermischen Massedurchflussmessgeräts, bei welcher während der Herstellung ein Platzhalter und ein Temperatursensor in einer Hülse platziert werden, wobei ein Lot die genannten Bauteile umfließt.

Die DE102009028850A1 zeigt eine weitere Sonde, bei welcher ein Thermoelement in einer Sondenhülse in Füllmaterial eingebettet ist.

Die US5271138B zeigt ein stangenförmiges thermisches Anemometer zur Geschwindigkeitsmessung von Gasen mit einem Sensorende, welches eine Öffnung und darin angeordnete Temperatursensoren und ein Heizelement aufweist.

Die US20050223828A1 zeigt eine Sonde eines thermischen Anemometers, bei welcher ein Dünnfilmsensorelement in einen Spalt eines Sondenkopfs hineingeschoben ist.

Nachteilhaft an einer solchen Lösung ist, dass ein Füllmaterial hinsichtlich des Wärmeübergangs zwischen Sonde und einem die Sonde umgebenden Mediums einerseits Schwankungen zwischen verschiedenen Sonden einer Serie verursacht und andererseits anfällig in Bezug auf Alterung der Sonde ist, so dass mit steigender Lebenszeit einer solchen Sonde zur Vermeidung von Messfehlern nachkalibriert werden muss.

Aufgabe der Erfindung ist es daher, eine Sonde vorzuschlagen, welche eine verbesserte Stabilität hinsichtlich ihrer Herstellung und hinsichtlich ihres Langzeitverhaltens aufweist.

Diese Aufgabe wird gelöst durch ein Verfahren zur Herstellung einer Sonde eines thermischen Durchflussmessgeräts gemäß Anspruch 1, durch eine Sonde für ein thermisches Durchflussmessgerät gemäß Anspruch 4 und durch ein thermisches Durchflussmessgerät gemäß Anspruch 10.

Das erfindungsgemäße Verfahren zur Herstellung einer Sonde eines thermischen Durchflussmessgeräts zur Messung des Massedurchflusses eines Mediums in einem Messrohr weist folgende Schritte auf:
Einbringen eines Sondenkerns in Form eines Schmelzguts in eine erste Sondenhülse, wobei die erste Sondenhülse ein offenes erstes Ende und ein dem ersten Ende abgewandtes geschlossenes zweites Ende aufweist;
Schmelzen des Sondenkerns;
Abkühlen des Sondenkerns auf eine Temperatur kleiner der Erstarrungstemperatur;
Aufbringen eines Thermoelements auf eine Kontaktfläche des erstarrten Sondenkerns.

Durch Schmelzen und anschließendes Abkühlen des Sondenkerns entsteht an einer Kontaktfläche Sondenkern - Sondenhülse eine Verbindungsschicht in welcher sich der Sondenkern mit der Sondenhülse fest verbindet, welche Verbindungsschicht einen guten Wärmeübergang sowie eine Langzeitstabilität hinsichtlich der thermischen Eigenschaften der Sonde gewährleistet.

Die Kontaktfläche wird auf das Anbringen des Thermoelements durch mechanische Bearbeitung vorbereitet.

Nach Abkühlen des Sondenkerns wird der Sondenkern durch teilweises Entfernen einer Wandung der ersten Sondenhülse in einem ersten Bereich freigelegt.

Nach dem Freilegen wird eine zweite Sondenhülse mit einem offenen dritten und einem offenen vierten Ende mittels des dritten offenen Endes leckdicht an das erste Ende angefügt, insbesondere angeschweißt, wobei die zweite Hülse den ersten Bereich vollständig umgreift.

In einer Ausgestaltung des Verfahrens wird der erste Bereich in einem Teilbereich mechanisch bearbeitet, so dass der Teilbereich des Sondenkerns von sämtlichen Oberflächen der ersten bzw. zweiten Sondenhülse beabstandet ist, wobei der Teilbereich sämtliche erste Querschnitte des Sondenkerns umfasst, welche erste Querschnitte die Kontaktfläche schneiden oder berühren.

In einer Ausgestaltung des Verfahrens wird das Thermoelement mittels einer Lot- oder Sinterschicht an der Kontaktfläche des Sondenkerns angebracht.

Die erfindungsgemäße Sonde eines thermischen Durchflussmessgeräts zur Messung des Massedurchflusses eines Mediums in einem Messrohr hergestellt durch ein erfindungsgemäßes Verfahren umfasst:
eine erste Sondenhülse mit einem offenen ersten Ende und einem geschlossenen zweiten Ende;
einen Sondenkern, welcher Sondenkern die erste Sondenhülse zumindest teilweise ausfüllt;
ein Thermoelement, welches mit dem Sondenkern thermisch gekoppelt ist, wobei das Thermoelement dazu eingerichtet ist, die Temperatur des Sondenkerns zu erhöhen oder zu erfassen;
wobei
das Herstellen des Sondenkerns Schmelzen eines Schmelzguts in der ersten Sondenhülse umfasst.

In einer Ausgestaltung der Sonde weist der Sondenkern eine erste Längsachse, eine mit der ersten Sondenhülse verbundene Mantelfläche, einen Massenschwerpunkt, und eine bezüglich des Massenschwerpunkts dem zweiten Ende des Sondenkerns abgewandte Kontaktfläche auf, wobei das Thermoelement mittels einer Lot- oder Sinterschicht an der Kontaktfläche angebracht ist.

In einer Ausgestaltung der Sonde umfasst der Sondenkern einen ersten Bereich, welcher aus der ersten Sondenhülse in axialer Richtung herausragt, wobei der erste Bereich die Kontaktfläche aufweist.

In einer Ausgestaltung der Sonde ist der erste Bereich durch eine zweite Sondenhülse mit einem offenen dritten und einem offenen vierten Ende umgriffen, welche zweite Sondenhülse über das dritte Ende leckdicht an das offene erste Ende der ersten Sondenhülse angefügt, insbesondere angeschweißt ist,
wobei der erste Bereich in einem Teilbereich mechanisch bearbeitet ist, so dass der Teilbereich des Sondenkerns von sämtlichen Oberflächen der ersten bzw. zweiten Sondenhülse beabstandet ist, wobei der zweite Bereich sämtliche erste Querschnitte des Sondenkerns umfasst, welche erste Querschnitte die Kontaktfläche schneiden oder beinhalten.

In einer Ausgestaltung der Sonde ist die erste Sondenhülse und/oder die zweite Sondenhülse zylindrisch ausgestaltet.

In einer Ausgestaltung der Sonde weist die erste Sondenhülse einen Edelstahl auf; wobei der Sondenkern eine Wärmeleitfähigkeit größer als 100 W/(m*K) aufweist, wobei der Sondenkern zumindest eines aus folgender Liste aufweist: Kupfer, Silber, Aluminium, Nickel, Indium, Gold, Zinn. Durch die deutlich bessere Wärmeleitfähigkeit des Sondenkerns in Bezug auf den Edelstahl, wird bei einer als Heizelement verwendeten Sonde eine homogene Temperaturverteilung an einer Wärmeübergangsfläche zwischen Sonde und einem die Sonde umströmenden Medium erreicht. Umgekehrt wird bei einer als Temperaturfühler verwendeten Sonde eine schnelle Temperaturanpassung des Sondenkerns an eine Temperaturänderung des Mediums und eine homogene Temperaturverteilung an der Kontaktfläche zwischen Sondenkern und Thermoelement erreicht.

Das erfindungsgemäße thermische Durchflussmessgerät zur Messung des Massedurchflusses eines Mediums umfasst:
ein Messrohr mit einer zweiten Längsachse;
mindestens eine erfindungsgemäße Sonde, welches in das Messrohr eingelassen ist;
eine elektronische Betriebsschaltung, welche dazu eingerichtet ist, die mindestens eine Sonde zu betreiben,
In einer Ausgestaltung der Sonde umfasst das thermische Durchflussmessgerät mindestens zwei Sonden,
wobei die elektronische Betriebsschaltung dazu eingerichtet ist, mindestens eine erste Sonde zu beheizen,
wobei die elektronische Betriebsschaltung dazu eingerichtet ist, die Temperatur des Mediums mittels mindestens einer zweiten Sonde zu bestimmen.

Im Folgenden wird die Erfindung anhand von Ausführungsbeispielen beschrieben.
Fig. 1 zeigt einen schematischen Verfahrensablauf zur Herstellung einer erfindungsgemäßen Sonde.
Figs. 2 a) bis d) zeigen Schritte der Herstellung einer erfindungsgemäßen Sonde.
Fig. 3 zeigt eine vergrößerte und verzerrte Darstellung des in Fig. 2 d) dargestellten Herstellungsstadiums.
Fig. 4 skizziert Ausführungsbeispiele der erfindungsgemäßen Sonde.
Fig. 5 skizziert eine schematische Frontansicht eines thermischen Durchflussmessgeräts mit zwei erfindungsgemäßen Sonden.

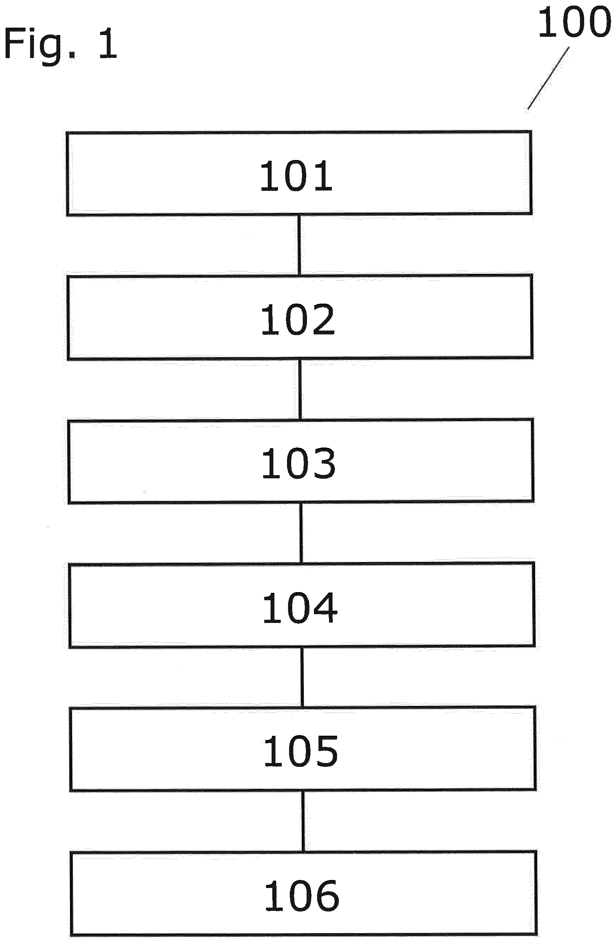

Fig. 1 zeigt eine Ausführungsform eines Verfahrensablaufs 100 zur Herstellung einer erfindungsgemäßen Sonde 10.

In einem ersten Schritt 101 wird ein Sondenkern 13 in Form eines Schmelzguts in eine erste Sondenhülse 11 eingeführt, wobei das Schmelzgut Kupfer oder Silber aufweist, und wobei die erste Sondenhülse 11 aus einem Edelstahl hergestellt ist.

In einem zweiten Schritt 102 wird der Sondenkern 13 geschmolzen, so dass sich das flüssige Material des Sondenkerns 13 im Bereich eines geschlossenen zweiten Endes 22 der ersten Sondenhülse 11 sammelt. Während der Sondenkern 13 flüssig ist, entsteht an einer Grenzfläche zwischen Sondenkern 13 und erster Sondenhülse 11 eine intermetallische Verbindungsschicht, in welcher sich das Material des Sondenkerns 13 und das Material der ersten Sondenhülse 11 vermischen.

In einem dritten Schritt 103 wir der Sondenkern 13 auf eine Temperatur kleiner seiner Erstarrungstemperatur abgekühlt. Aufgrund der Ausbildung der intermetallischen Verbindungsschicht bleibt der Kontakt zwischen Sondenkern 13 und erster Sondenhülse 11 nach Erstarren des Sondenkerns erhalten.

In einem vierten Schritt 104 wird der Sondenkern 13 durch teilweises Entfernen einer Wandung der ersten Sondenhülse 11 in einem ersten Bereich freigelegt.

In einem fünften Schritt 105 wird eine Kontaktfläche 14 auf das Anbringen eines Thermoelements 31 durch mechanische Bearbeitung vorbereitet, insbesondere geglättet und ausgerichtet. Das kann beispielsweise durch Bohren oder Fräsen bewerkstelligt werden.

In einem sechsten Schritt 106 wird ein Thermoelement mittels einer Lot- bzw. Sinterschicht an der Kontaktfläche angebracht.

In einem siebten Schritt 107 wird eine zweite Sondenhülse 12 mit einem offenen dritten Ende 23 und einem offenen vierten Ende 24 mittels des offenen dritten Endes leckdicht an das erste Ende 21 angefügt, insbesondere angeschweißt, wobei die zweite Sondenhülse 12 den ersten Bereich vollständig umgreift.

Vorteilhafterweise wird der erste Bereich in einem Teilbereich mechanisch bearbeitet, so dass der Teilbereich 16 des Sondenkerns von sämtlichen Oberflächen der ersten Sondenhülse 11 und/oder zweiten Sondenhülse 12 beabstandet ist, wobei der Teilbereich 16 sämtliche erste Querschnitte des Sondenkerns umfasst, welche erste Querschnitte die Kontaktfläche 14 schneiden oder berühren.

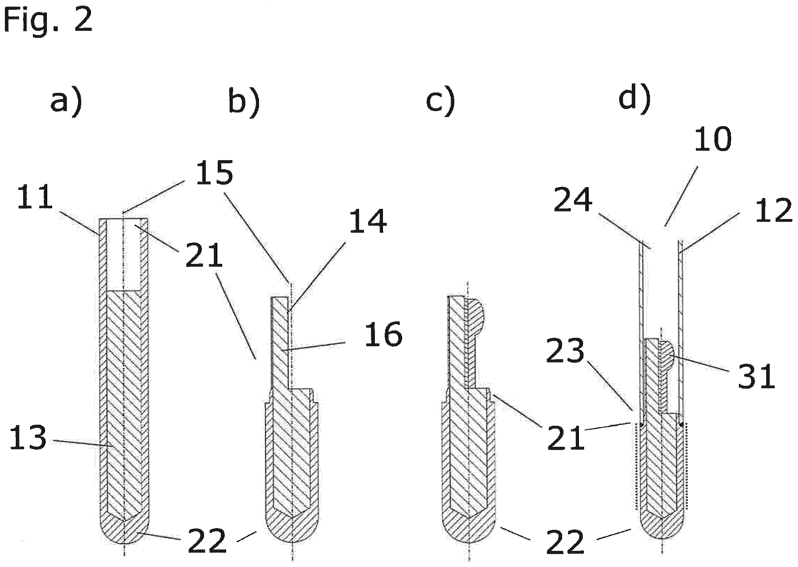

Fig. 2 zeigt Querschnitte einer erfindungsgemäßen Sonde 10 in verschiedenen Stadien der Herstellung.

Fig. 2 a) zeigt einen Querschnitt der Sonde 10 in einem Stadium, in welchem die erste Sondenhülse 11 den Sondenkern 13 in flüssigem oder bereits erstarrtem Zustand aufweist.

Fig. 2 b) zeigt einen Querschnitt der Sonde in einem Stadium, in welchem der Sondenkern im ersten Bereich freigelegt ist, wobei ein Freilegen des Sondenkerns einen Zugang zum Sondenkern 13 radial zu einer ersten Längsachse 15 ermöglicht.

Fig. 2 c) zeigt einen Querschnitt der Sonde in einem Stadium, in welchem nach Freilegen des Sondenkerns 13 im Bereich das Thermoelement 31 an der Kontaktfläche 14 des Sondenkerns 13 angebracht ist.

Fig. 2 d) zeigt einen Querschnitt einer fertiggestellten Sonde 10, mit der zweiten Sondenhülse 12, welche über das dritte Ende 23 an das erste Ende 21 der ersten Sondenhülse 11 angefügt, insbesondere angeschweißt ist.

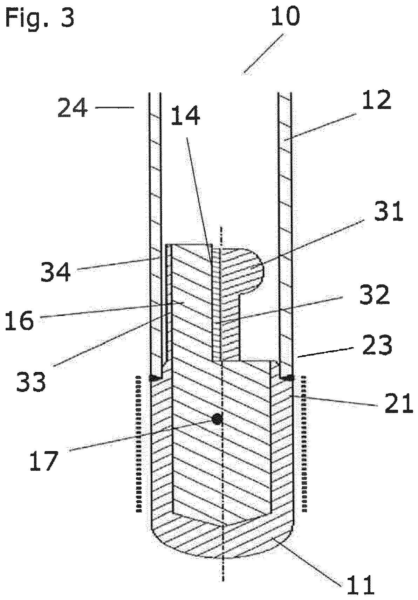

Fig. 3 zeigt eine vergrößerte Darstellung des in Fig. 2 d) gezeigten Querschnitts der fertiggestellten Sonde 10, wobei die Darstellung horizontal verzerrt ist, um feine Details sichtbar zu machen. Das Thermoelement 31 ist über eine Lot- bzw. Sinterschicht 32 an die Kontaktfläche 14 des Sondenkerns 13 angebracht. Der Sondenkern 13 ist auf einer der Kontaktfläche 14 gegenüberliegenden Seite durch eine Stütze 33 gestützt, wobei die Stütze 33 ein Ausläufer der ersten Sondenhülse 11 ist. Es ist auch eine Ausführungsform der Sonde 10 ohne die Stütze 33 denkbar. Der Sondenkern 13 ist dabei im Teilbereich 16 derart ausgestaltet, dass er zu sämtlichen Oberflächen der zweiten Sondenhülse 12 beabstandet ist. Falls die Sonde keine Stütze 33 aufweist, ist der Sondenkern 13 im Teilbereich 16 von sämtlichen Oberflächen der ersten Sondenhülse 11 und der zweiten Sondenhülse 12 beabstandet. Die Beabstandung des Sondenkerns von der zweiten Sondenhülse bzw. von der ersten Sondenhülse und der zweiten Sondenhülse im Teilbereich sorgt für eine homogene Verteilung der Temperatur im Sondenkern. Dadurch ist bei Verwendung der Sonde 10 als Heizelement eine gleichförmige Wärmeabgabe an das Medium im gepunkteten Bereich sichergestellt. Umgekehrt, bei Verwendung der Sonde als Temperaturfühler, ist eine gleichförmige Beaufschlagung des Thermoelements 31 mit der Temperatur des Mediums sichergestellt.

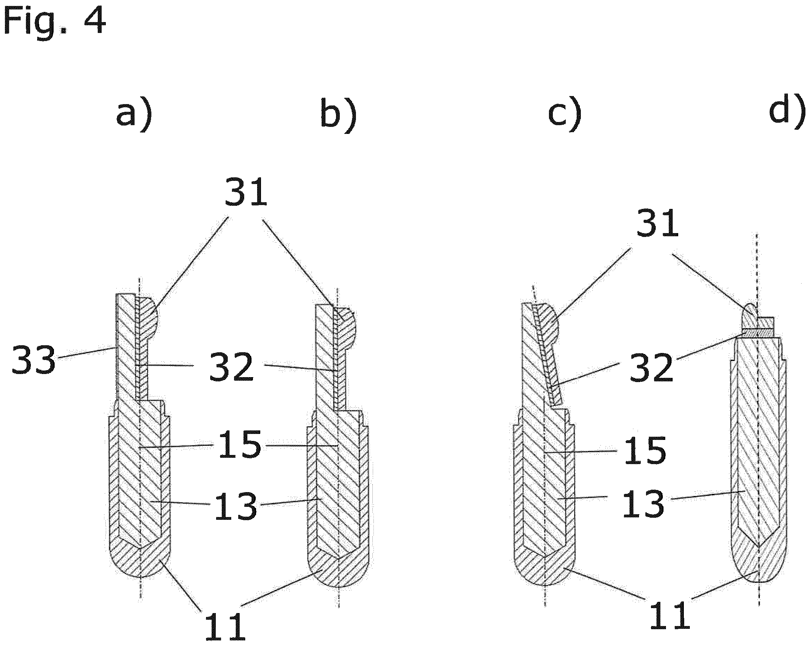

Fig. 4 a) bis d) zeigen schematische Querschnitte mehrerer erfindungsgemäße Ausführungsformen der Sonde, wobei zwecks Übersichtlichkeit auf die Darstellung der zweiten Sondenhülse verzichtet wurde. Fig. 4 a) zeigt die in Fig. 2 a) bis d) und in Fig. 3 dargestellte Ausführungsform mit Stütze 33. Fig. 4 b) zeigt die in Fig. 4 a) dargestellte Ausführungsform ohne Stütze. Fig. 4 c) zeigt eine Ausführungsform mit schräg zur ersten Längsachse 15 gestellten Kontaktfläche 14. Fig. 4 d) zeigt eine Ausführungsform mit senkrecht zur Längsachse 15 stehenden Kontaktfläche 14. Die in Fig. 4 b) und c) gezeigten Ausführungsformen können auch eine Stütze gemäß der in Fig. 4 a) gezeigten Ausführungsform aufweisen. Die in Fig. 4 a) bis c) gezeigten Ausführungsformen ermöglichen es bei einem vorgegebenen Thermoelement 31 dünne Sonden zu fertigen.

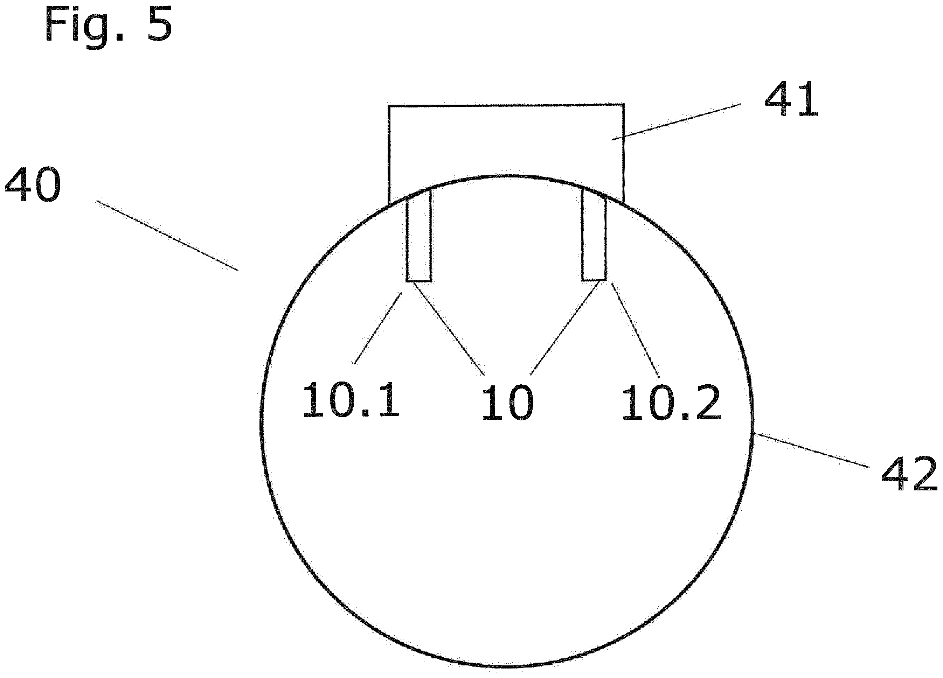

Fig. 5 zeigt eine schematische Frontansicht auf ein erfindungsgemäßes thermisches Durchflussmessgerät 40 mit einem Messrohr 42, zwei erfindungsgemäße Sonden 10, welche im Lumen des Messrohrs 42 angeordnet sind, und einem Gehäuse 41, welches eine elektronischen Betriebsschaltung aufweist, welche elektronische Betriebsschaltung dazu eingerichtet ist, die Sonden 10 zu betreiben.

Um den Massedurchfluss eines Mediums durch das Messrohr 40 zu messen, wird beispielsweise eine Sonde 10.1 im durch das Messrohr 40 strömenden Medium derart beheizt, dass eine Temperaturdifferenz gegenüber der Medientemperatur konstant bleibt. Es bietet sich an, einen zweite Sonde 10.2 zur Temperaturmessung des Mediums zu verwenden, welcher vor oder wie in Fig. 2 gezeigt neben der beheizten Sonde 10.1 angeordnet ist, um die Temperaturdifferenz zu halten. Unter Voraussetzung gleichbleibender Medieneigenschaften wie Dichte oder Zusammensetzung lässt sich über den zum Halten der Temperatur notwendigen Heizstrom auf den Massedurchfluss des Mediums schließen.

Die Sonden 10 können auch in Strömungsrichtung hintereinander angeordnet sein, wobei eine erste stromaufwärtige Sonde das vorbeiströmende Medium und damit eine zweite stromabwärtige Sonde beheizt. Dabei ist die zum Halten einer Temperaturdifferenz benötigte Heizleitung der ersten Sonde abhängig von der Durchflussgeschwindigkeit des Mediums.

### Bezugszeichenliste

- 10: Sonde
- 10.1: erste Sonde
- 10.2: zweite Sonde
- 11: erste Sondenhülse
- 12: zweite Sondenhülse
- 13: Sondenkern
- 14: Kontaktfläche
- 15: erste Längsachse
- 16: Teilbereich
- 17: Massenschwerpunkt
- 21: erstes Ende
- 22: zweites Ende
- 23: drittes Ende
- 24: viertes Ende
- 31: Thermoelement
- 32: Lotschicht / Sinterschicht
- 33: Stütze
- 34: Beabstandung
- 40: Durchflussmessgerät
- 41: Gehäuse
- 42: Messrohr
- 100: Verfahren zur Herstellung einer erfindungsgemäßen Sonde
- 101: Einbringen eines Sondenkerns in Form eines Schmelzguts in eine erste Sondenhülse
- 102: Schmelzen des Sondenkerns
- 103: Abkühlen des Sondenkerns unter Erstarrungstemperatur
- 104: Freilegen des Sondenkerns in einem ersten Bereich
- 105: Vorbereiten der Kontaktfläche auf Anbringung des Thermoelements
- 106: Anbringen eines Thermoelements an die Kontaktfläche mittels einer Lot- bzw. Sinterschicht
- 107: Anfügen der zweiten Sondenhülse an die erste Sondenhülse

## Patentansprüche

1. Verfahren zur Herstellung einer Sonde (10) eines thermischen Durchflussmessgeräts zur Messung des Massedurchflusses eines Mediums in einem Messrohr,
wobei das Verfahren folgende Schritte aufweist:
Einbringen eines Sondenkerns (13) in Form eines Schmelzguts in eine erste Sondenhülse (11), wobei die erste Sondenhülse (11) ein offenes erstes Ende (21) und ein dem ersten Ende (21) abgewandtes geschlossenes zweites Ende (22) aufweist;
Schmelzen des Sondenkerns (13);
Abkühlen des Sondenkerns (13) auf eine Temperatur kleiner der Erstarrungstemperatur;
Aufbringen eines Thermoelements (31) auf eine Kontaktfläche (14) des erstarrten Sondenkerns (13),
**dadurch gekennzeichnet, dass**
die Kontaktfläche (14) auf das Anbringen des Thermoelements (31) durch mechanische Bearbeitung vorbereitet wird.
wobei
nach Abkühlen des Sondenkerns (13) der Sondenkern (13) durch teilweises Entfernen einer Wandung der ersten Sondenhülse (11) in einem ersten Bereich freigelegt wird.
wobei nach dem Freilegen eine zweite Sondenhülse (12) mit einem offenen dritten Ende (23) und einem offenen vierten Ende (24) mittels des dritten offenen Endes leckdicht an das erste Ende (21) der ersten Sondenhülse (11) angefügt, insbesondere angeschweißt, wird, wobei die zweite Sondenhülse (12) den ersten Bereich vollständig umgreift.

2. Verfahren nach Anspruch 1,
wobei der erste Bereich in einem Teilbereich (16) mechanisch bearbeitet wird, so dass der Teilbereich (16) des Sondenkerns (13) von sämtlichen Oberflächen der ersten Sondenhülse (11) und/oder der zweiten Sondenhülse (12) beabstandet ist, wobei der Teilbereich (16) sämtliche erste Querschnitte des Sondenkerns (13) umfasst, welche erste Querschnitte die Kontaktfläche (14) schneiden oder berühren.

3. Verfahren nach einem der vorigen Ansprüche,
wobei das Thermoelement (31) mittels einer Lot- oder Sinterschicht (32) an der Kontaktfläche (14) des Sondenkerns (13) angebracht wird.

4. Sonde (10) für ein thermisches Durchflussmessgerät zur Messung des Massedurchflusses eines Mediums in einem Messrohr, hergestellt durch ein erfindungsgemäßes Verfahren nach einem der vorigen Ansprüche, umfassend:
eine erste Sondenhülse (11) mit einem offenen ersten Ende (21) und einem geschlossenen zweiten Ende (22);
einen Sondenkern (13), welcher Sondenkern (13) die erste Sondenhülse (11) zumindest teilweise ausfüllt;
ein Thermoelement (31), welches mit dem Sondenkern (13) thermisch gekoppelt ist, wobei das Thermoelement (31) dazu eingerichtet ist, die Temperatur des Sondenkerns (13) zu erhöhen oder zu erfassen;
wobei
das Herstellen des Sondenkerns (13) Schmelzen eines Schmelzguts in der ersten Sondenhülse (11) umfasst.

5. Sonde (10) nach Anspruch 4,
wobei der Sondenkern (13) eine erste Längsachse, eine mit der ersten Sondenhülse (11) verbundene Mantelfläche, einen Massenschwerpunkt, und eine bezüglich des Massenschwerpunkts dem zweiten Ende (22) des Sondenkerns (13) abgewandte Kontaktfläche (14) aufweist,
wobei das Thermoelement (31) mittels einer Lot- oder Sinterschicht (32) an der Kontaktfläche (14) angebracht ist.

6. Sonde (10) nach Anspruch 4 oder 5,
wobei der Sondenkern (13) einen ersten Bereich umfasst, welcher aus der ersten Sondenhülse (11) in axialer Richtung herausragt, wobei der erste Bereich die Kontaktfläche (14) aufweist.

7. Sonde (10) nach Anspruch 6,
wobei der erste Bereich durch eine zweite Sondenhülse (12) mit einem offenen dritten Ende (23) und einem offenen vierten Ende (24) umfasst ist, welche zweite Sondenhülse (12) über das dritte Ende (23) leckdicht an das offene erste Ende der ersten Sondenhülse (11) angefügt, insbesondere angeschweißt ist,
wobei der erste Bereich in einem Teilbereich mechanisch bearbeitet ist, so dass der Teilbereich (16) des Sondenkerns (13) von sämtlichen Oberflächen der ersten Sondenhülse (11) und/oder zweiten Sondenhülse (12) beabstandet ist, wobei der Teilbereich sämtliche erste Querschnitte des Sondenkerns (13) umfasst, welche erste Querschnitte die Kontaktfläche (14) schneiden oder beinhalten.

8. Sonde (10) nach einem der Ansprüche 5 bis 7,
wobei die erste Sondenhülse (11) und/oder die zweite Sondenhülse (12) zylindrisch, und insbesondere rotationssymmetrisch ausgestaltet ist.

9. Sonde (10) nach einem der Ansprüche 5 bis 8,
wobei die erste Sondenhülse (11) einen Edelstahl aufweist; und wobei der Sondenkern (13) eine Wärmeleitfähigkeit größer als 100 W/(m*K) aufweist, wobei der Sondenkern zumindest eines aus folgender Liste aufweist: Kupfer, Silber, Aluminium, Nickel, Indium, Gold, Zinn.

10. Thermisches Durchflussmessgerät zur Messung des Massedurchflusses eines Mediums in einem Messrohr mit mindestens einer erfindungsgemäßen Sonde nach einem der vorigen Ansprüche 4 bis 9,
wobei das thermische Durchflussmessgerät umfasst:
ein Messrohr mit einer zweiten Längsachse;
wobei die mindestens eine Sonde (10) in das Messrohr eingelassen ist; und
eine elektronische Betriebsschaltung, welche dazu eingerichtet ist, die mindestens eine Sonde (10) zu betreiben.

11. Thermisches. Durchflussmessgerät nach Anspruch 10, wobei das thermische Durchflussmessgerät mindestens zwei Sonden (10) umfasst,
wobei die elektronische Betriebsschaltung dazu eingerichtet ist, mindestens eine erste Sonde (10.1) zu beheizen,
wobei die elektronische Betriebsschaltung dazu eingerichtet ist, die Temperatur des Mediums mittels mindestens einer zweiten Sonde (10.2) zu bestimmen.

## Claims

1. Procedure for the fabrication of a probe (10) of a thermal flowmeter for the measurement of the mass flow of a medium in a measuring tube,
wherein said procedure comprises the following steps:
Insertion of a probe core (13) in the form of a molten material in a first probe sleeve (11), wherein the first probe sleeve (11) has an open first end (21) and a closed second end (22) facing away from the first end (21);
Smelting of the probe core (13) ;
Cooling of the probe core (13) to a temperature less than the solidification temperature;
Application of a thermocouple (31) on a contact surface (14) of the solidified probe core (13),
**characterized in that**
the contact surface (14) is prepared for the application of the thermocouple (31) by mechanical processing,
wherein, following the cooling of the probe core (13), the probe core (13) is exposed in a first area by the partial removal of a wall of the first probe sleeve (11),
wherein, following the exposure of said area, a second probe sleeve (12) having an open third end (23) and an open fourth end (24) is joined, particularly welded, in a leak-tight manner to the first end (21) of the first probe sleeve (11) by means of the third open end, wherein the second probe sleeve (12) entirely surrounds the first area.

2. Procedure as claimed in Claim 1,
wherein the first area is mechanically treated in a subsection (16) in such a way that the subsection (16) of the probe core (13) is at a distance from all the surfaces of the first probe sleeve (11) and/or of the second probe sleeve (12), wherein the subsection (16) comprises all the first cross-sections of the probe core (13), said first cross-sections cutting or touching the contact surface (14).

3. Procedure as claimed in one of the previous claims,
wherein the thermocouple (31) is applied on the contact surface (14) of the probe core (13) using a solder or sinter layer (32).

4. Probe (10) for a thermal flowmeter, designed to measure the mass flow of a medium in a measuring tube, fabricated using a procedure according to the invention as claimed in one of the previous claims, comprising:
a first probe sleeve (11) with an open first end (21) and a closed second end (22);
a probe core (13), said probe core (13) at least partially filling the first probe sleeve (11);
a thermocouple (31), which is thermally coupled to the probe core (13), said thermocouple (31) being designed to increase or measure the temperature of the probe core (13);
wherein the fabrication of the probe core (13) comprises the smelting of a molten material in the first probe sleeve (11).

5. Probe (10) as claimed in Claim 4,
wherein the probe core (13) has a first longitudinal axis, a lateral surface connected to the first probe sleeve (11), a center of mass and a contact surface (14) facing away from the second end (22) of the probe core (13) in relation to the center of mass,
wherein the thermocouple (31) is applied to the contact surface (14) by means of a solder or sinter layer (32).

6. Probe (10) as claimed in Claim 4 or 5,
wherein the probe core (13) comprises a first area which projects out of the first probe sleeve (11) in the axial direction, the first area having the contact surface (14).

7. Probe (10) as claimed in Claim 6,
wherein the first area is surrounded by a second probe sleeve (12) with an open third end (23) and an open fourth end (24), said second probe sleeve (12) being joined, particularly soldered, in a leak-tight manner, via the third end (23), to the open first end of the first probe sleeve (11),
wherein the first area is mechanically treated in a subsection in such a way that the subsection (16) of the probe core (13) is at a distance from all the surfaces of the first probe sleeve (11) and/or of the second probe sleeve (12), wherein the subsection comprises all the first cross-sections of the probe core (13), said first cross-sections cutting or including the contact surface (14).

8. Probe (10) as claimed in one of the Claims 5 to 7,
wherein the first probe sleeve (11) and/or the second probe sleeve (12) is designed in a cylindrical manner, particularly in a rotationally symmetric manner.

9. Probe (10) as claimed in one of the Claims 5 to 8,
wherein the first probe sleeve (11) features a stainless steel and wherein the probe core (13) has a thermal conductivity greater than 100 W/(m*K), wherein the probe core features at least one of the following metals: copper, silver, aluminum, nickel, indium, gold or tin.

10. Thermal flowmeter designed to measure the mass flow of a medium in a measuring tube with at least a probe according to the invention as claimed in one of the previous Claims 4 to 9,
wherein the thermal flowmeter comprises:
a measuring tube with a second longitudinal axis;
wherein the at least one probe (10) is inserted into the measuring tube;
and an electronic operating circuit which is designed to operate the at least one probe (10).

11. Thermal flowmeter as claimed in Claim (10),
wherein the thermal flowmeter comprises at least two probes (10),
wherein the electronic operating circuit is designed to heat at least a first probe (10.1),
wherein the electronic operating circuit is designed to determine the temperature of the medium using at least a second probe (10.2).

## Revendications

1. Procédé destiné à la fabrication d'une sonde (10) d'un débitmètre thermique pour la mesure du débit massique d'un produit dans un tube de mesure,
lequel procédé comprend les étapes suivantes :
Insertion d'un noyau de sonde (13) sous la forme d'une matière à fondre dans une première douille de sonde (11), la première douille de sonde (11) présentant une première extrémité ouverte (21) et une seconde extrémité fermée (22) tournée à l'opposé de la première extrémité (21) ;
Fusion du noyau de sonde (13) ;
Refroidissement du noyau de sonde (13) à une température inférieure à la température de solidification ;
Application d'un thermocouple (31) sur une surface de contact (14) du noyau de sonde (13) solidifié,
**caractérisé**
**en ce que** la surface de contact (14) est préparée par un traitement mécanique pour l'application du thermocouple (31),
procédé pour lequel, après refroidissement du noyau de sonde (13), le noyau de sonde (13) est exposé dans une première zone par l'enlèvement partiel d'une paroi de la première douille de sonde (11),
procédé pour lequel, après l'exposition de cette zone, une deuxième douille de sonde (12) présentant une troisième extrémité ouverte (23) et une quatrième extrémité ouverte (24) est jointe, notamment soudée, de manière étanche à la première extrémité (21) de la première douille de sonde (11) au moyen de la troisième extrémité ouverte, la deuxième douille de sonde (12) entourant entièrement la première zone.

2. Procédé selon la revendication 1,
pour lequel la première zone est traitée mécaniquement dans une zone partielle (16) de sorte que la zone partielle (16) du noyau de sonde (13) est espacée de toutes les surfaces de la première douille de sonde (11) et/ou de la deuxième douille de sonde (12), la zone partielle (16) comprenant toutes les premières sections du noyau de sonde (13), lesquelles premières sections coupent ou touchent la surface de contact (14).

3. Procédé selon l'une des revendications précédentes,
pour lequel le thermocouple (31) est appliqué à la surface de contact (14) du noyau de sonde (13) au moyen d'une couche de soudure ou de frittage (32).

4. Sonde (10) pour un débitmètre thermique, destinée à la mesure du débit massique d'un produit dans un tube de mesure, fabriquée par un procédé conforme à l'invention selon l'une des revendications précédentes, comprenant :
une première douille de sonde (11) avec une première extrémité ouverte (21) et une deuxième extrémité ouverte (22) ;
un noyau de sonde (13), lequel noyau de sonde (13) remplit au moins partiellement la première douille de sonde (11) ;
un thermocouple (31), lequel est couplé thermiquement avec le noyau de sonde (13), le thermocouple (31) étant conçu pour augmenter ou mesurer la température du noyau de sonde (13) ;
la fabrication du noyau de sonde (13) comprenant la fusion d'une matière à fondre dans la première douille de sonde (11).

5. Sonde (10) selon la revendication 4,
pour laquelle le noyau de sonde (13) présente un premier axe longitudinal, une surface latérale reliée à la première douille de sonde (11), un centre de masse et une surface de contact (14) tournée à l'opposé de la deuxième extrémité (22) du noyau de sonde (13) par rapport au centre de masse,
le thermocouple (31) étant appliqué à la surface de contact (14) au moyen d'une couche de soudure ou de frittage (32).

6. Sonde (10) selon la revendication 4 ou 5,
pour laquelle le noyau de sonde (13) comprend une première partie qui fait saillie de la première douille de sonde (11) dans la direction axiale, la première partie présentant la surface de contact (14).

7. Sonde (10) selon la revendication 6,
pour laquelle la première zone est entourée par une deuxième douille de sonde (12) avec une troisième extrémité ouverte (23) et une quatrième extrémité ouverte (24), laquelle deuxième douille de sonde (12) est jointe, notamment soudée, de façon étanche aux fuites par le biais de la troisième extrémité (23) à la première extrémité ouverte de la première douille de sonde (11),
la première zone étant traitée mécaniquement dans une zone partielle de telle sorte que la zone partielle (16) du noyau de sonde (13) est espacée de toutes les surfaces de la première douille de sonde (11) et/ou de la deuxième douille de sonde (12), la zone partielle comprenant l'ensemble des premières sections du noyau de sonde (13), lesquelles première sections coupent ou incluent la surface de contact (14).

8. Sonde (10) selon l'une des revendications 5 à 7,
pour laquelle la première douille de sonde (11) et/ou la deuxième douille de sonde (12) est conçue de manière cylindrique, notamment avec une symétrie de révolution.

9. Sonde (10) selon l'une des revendications 5 à 8,
pour laquelle la première douille de sonde (11) comprend un acier inoxydable et le noyau de sonde (13) présente une conductivité thermique supérieure à 100 W/(m*K), le noyau de sonde étant constitué d'au moins l'un des métaux suivants : cuivre, argent, aluminium, nickel, indium, or, étain.

10. Débitmètre thermique destiné à la mesure du débit massique d'un produit dans un tube de mesure avec au moins une sonde conforme à l'invention selon l'une des revendications 4 à 9,
le débitmètre thermique comprenant :
un tube de mesure avec un deuxième axe longitudinal ;
l'au moins une sonde (10) étant insérée dans le tube de mesure ;
et un circuit d'exploitation électronique, lequel est conçu pour exploiter l'au moins une sonde (10).

11. Débitmètre thermique selon la revendication (10),
le débitmètre thermique comprenant au moins deux sondes (10),
le circuit d'exploitation électronique étant conçu pour chauffer au moins une première sonde (10.1),
le circuit d'exploitation électronique étant conçu pour déterminer la température du produit au moyen d'une deuxième sonde (10.2).
